(19) Europäisches Patentamt
European Patent Office
Office européen des brevets

(11) **EP 3 771 513 B1**

(12) **EUROPEAN PATENT SPECIFICATION**

(45) Date of publication and mention
of the grant of the patent:
**31.08.2022   Bulletin 2022/35**

(21) Application number: **20183575.8**

(22) Date of filing: **02.07.2020**

(51) International Patent Classification (IPC):
**B23D 59/00** *(2006.01)*      **B27B 5/06** *(2006.01)*

(52) Cooperative Patent Classification (CPC):
**B27B 5/06; B23D 59/008**

(54) **MACHINE FOR WORKING PANELS IN WOOD AND THE LIKE AND  METHOD OF USING IT**

MASCHINE ZUR BEARBEITUNG VON PLATTEN AUS HOLZ UND DERGLEICHEN UND VERWENDUNGSMETHODE

MACHINE POUR USINER DES PANNEAUX EN BOIS ET SIMILARE ET PROCÉDÉ D'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2019   IT 201900013566**

(43) Date of publication of application:
**03.02.2021   Bulletin 2021/05**

(73) Proprietor: **SCM Group S.p.A.
47921 Rimini (RN) (IT)**

(72) Inventor: **OLIVIERI, Massimiliano
47921 RIMINI  (RN) (IT)**

(74) Representative: **Tiburzi, Andrea et al
Barzanò & Zanardo Roma S.p.A.
Via Piemonte 26
00187 Roma (IT)**

(56) References cited:
**EP-A1- 2 377 652      WO-A1-2018/153937
US-A- 4 181 054**

EP 3 771 513 B1

## Description

The present invention relates to a machine according to the preamble of claim 1, for working panels in wood and the like, in particular for cutting panels.

The present invention also relates to an operating method of the machine.

Such a machine is known from document WO 2018/153937 A1.

More specifically, the invention relates to a machine of the mentioned type, studied and realized in particular for cutting panels made of wood, plastic, metal, glass, fiberglass, ceramic and the like, by means of a blade tool, in which the pieces pattern to cut the single panel is optimized to reduce the waste following the working.

The machine object of the invention is provided with a logic control unit, a work surface for resting said panels, a processing unit for said panels, configured in particular for cutting said panels in a plurality of panels of smaller dimensions than the panel at the machine at the entry, according to a piece pattern stored in said logic control unit.

In particular, said working unit is a unit provided with a blade which performs a nesting working, which then receives a single panel at the entry and provides a machined panel at the exit, comprising a plurality of separate panels, having smaller dimensions than the single panel supplied at the entry of the working unit, also having different dimensions and also possibly including waste and reusable portions.

By waste portions it is meant portions of worked panel that can no longer be used for subsequent working, since they have irregular shapes or too small dimensions.

By reusable portions it is meant portions of the panel useful for subsequent working, since they have regular shapes and standard sizes.

In the following the description will be addressed to an improved machine for the optimization of the panels cutting by a nesting processing unit but it is clear that the same should not be considered limited to this specific use.

As it is well known, currently a machine for nesting working comprises a nesting processing unit, usually provided with an end mill type tool , which carries out the cut on the panel according to the predefined piece pattern and a work surface for supporting the panels to be worked.

Said work surface extends from the entry of said nesting working unit, at which the panels to be worked are loaded, one at a time, up to the exit from the nesting working unit.

At the outlet from said nesting working unit there is a plurality of cut panels, separated from each other, arranged on the work surface.

The end mill type cutting tool, used in known machines, usually has a large diameter.

This causes the removal of a large amount of material during the cutting of the panels.

Therefore, for certain processes that require high cutting precision and low material waste, a toothed circular blade is often used as a cutting tool.

However, in known machines equipped with nesting working units with a circular blade, due to the circular shape of the tool, i.e. its non-linearity in the cutting plane on the panel, it is not possible to predict the actual waste generated as a result of the working itself.

This causes the unnecessary cutting of portions of the panel which could instead be used for subsequent working.

Furthermore, following the working with a circular blade tool, there is a cut excess, that is an excess of the panel P that is cut in excess than necessary to respect the predefined pieces pattern, due precisely to the circularity of the blade.

In known machines, said cutting excess is always considered to be equal to the radius of the circular blade.

The relevant prior art also includes patent applications EP 2377652 A1 and US 4181054 A.

In light of the above, it is therefore an object of the present invention to provide a machine comprising a nesting working unit comprising a circular blade which follows predetermined pieces patterns.

A further object of the present invention is to perform optimized pieces pattern to secure entire portions of the panel that can be used in following workings.

Still object of the present invention is to carry out the calculation of an effective cutting excess.

Finally, the object of the present invention is to provide the tools necessary for the execution of the method and the apparatuses which perform this method.

It is therefore specific object of the present invention a machine for working at least one panel, in wood, plastic, metal, fiberglass, glass and the like, comprising a working unit of said at least one panel, having a thickness, receiving on entry said at least one panel, and providing on exit a panel comprising a plurality of portions, wherein said panel has been divided according to a predetermined pieces pattern, a logic control unit, operationally connected with said working unit and provided with a program for controlling said working unit, said working unit may comprise at least one first saw having a radius, said logic control unit being configured for receiving the following input parameters: said predetermined pieces pattern, said thickness of said panel, said radius of said first saw; and calculating a cuttings pattern in order to obtain waste portions and reusable portions in function of said input parameters.

Further according to the invention, said logic control unit is configured for controlling the movement of said first saw on said panel for carrying out said cutting pattern.

Still according to the invention, said cuttings pattern is associated with a cutting excess Ec, and said cutting excess Ec is calculated according to the following formula:

$$E_c = \sqrt{2 \cdot r \cdot d - d^2}$$

where *d* is the thickness of said panel and *r* is the radius of said first saw.

Preferably according to the invention, said working unit comprises a second tool.

Further according to the invention, said first saw carries out an incision on said panel sliding along a forward direction and\or according to a first predetermined direction, said second tool carries out a breaking cut of said incision sliding in a second direction opposite to said first direction.

Still according to the invention, said first saw carries out a working on said panel sliding along a first forward direction, and said second tool carries out a working sliding according to a second forward direction perpendicular with respect to said first forward direction.

Preferably according to the invention, said first tool is a ball end mill.

Further according to the invention, said logic control unit is configured for iteratively calculating a cuttings pattern on said reusable portions.

It is further object of the present invention an operation method of a machine for working at least one panel, having a thickness, in wood, plastic, metal, fiberglass, glass and the like, of the type comprising a first saw having a radius comprising the following steps:

a. acquiring a predetermined pieces pattern of said panel;
b. acquiring said thickness of said panel;
c. acquiring said radius of said first saw;
d. calculating a cuttings pattern associated with a cutting excess $E_c$ in function of the acquired parameters in said points a., b., and c. according to the following formula

$$E_c = \sqrt{2 \cdot r \cdot d - d^2}$$

e. cutting said at least one panel in a plurality of portions, waste portions and reusable portions according to said cuttings pattern calculated in said step d.

Further according to the invention, said method may comprise a labelling step of said plurality of portions, before or after said step e.

Still according to the invention, said method may comprise a changing tool step for replacing said first saw with a ball end mill.

Preferably according to the invention, said method may comprise comprises a further step d'. for calculating a further cuttings pattern on said one or more reusable portions, to be carried out at the same time or after said step d.

The present invention will be now described, for illustrative but not limitative purposes, according to its preferred embodiments, with particular reference to the figures of the enclosed drawings, wherein:

figure 1 shows a perspective side view of the improved machine for working panels, made of wood and the like, object of the present invention;
figure 2a shows a schematic side view of the cutting tool comprised in the machine of figure 1;
figure 2b shows a schematic side view of a further cutting tool comprised in the machine of figure 1;
figure 3 shows a predefined pieces pattern for cutting a panel using the tool of figure 2;
figure 4 shows the scheme of a linear cutting mode to be performed on a panel using the tool of figure 2;
figure 5 shows the pattern of a zigzag cutting mode to be performed on a panel using the tool of figure 2;
figure 6 shows a predefined pieces pattern for cutting a panel using the tool of figure 2;
figure 7 shows a further predefined pieces pattern for cutting a panel using the tool of figure 2;
figure 8 shows a predefined pieces pattern for cutting a panel using the tool of figure 2;
figure 9 shows a predefined pieces pattern for cutting a panel using the tool of figure 2;
figure 10 shows a predefined pieces pattern pieces for cutting a panel using the tool of figure 2;
figure 11 shows a predefined pieces pattern for cutting a panel using the tool of figure 2,
figure 12 shows the plurality of cut pieces, the waste portion and the reusable portion; and
figure 13 shows the plurality of the cut pieces, the waste portion, the reusable portion and the further cuttings pattern calculated on the reusable portion.

In the various figures, similar parts will be indicated by the same reference numbers.

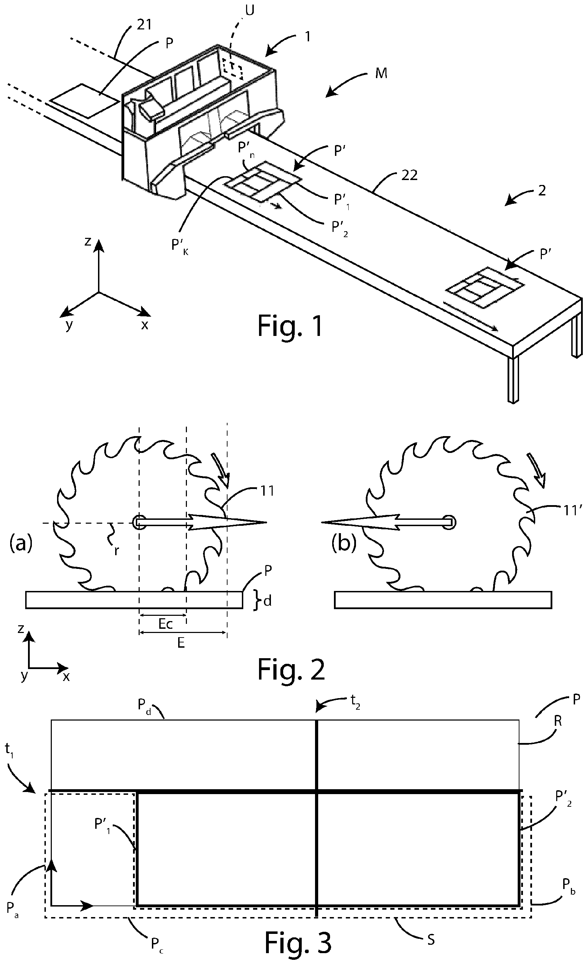

Referring to figures 1-3, the machine M for working panels, made of wood and the like, object of the present invention, comprises a nesting working unit 1 of a single panel P, having thickness d, a work surface 2 for supporting the panel P, and a logic control unit U for the operation of said machine M.

Said working unit 1 translates, according to a first X axis, along said work surface 2, and according to a second Y axis, perpendicular to said first X axis.

The panels P are loaded on said work surface 2, one at a time, and, following the working by said working unit 1, as shown in figure 3, a panel P' is obtained, which is worked and divided into a plurality of panels P'$_1$, P'$_2$, ..., P'$_n$ having a size smaller than the that of the panel P, and also comprising waste S and reusable R portions.

As shown in figure 2a, said nesting working unit 1 is provided with at least one first processing tool, in particular a blade 11, preferably of circular shape type, having radius r, which cuts said panel P, according to a predetermined working program, or pieces pattern, stored in said logic control unit U, supplying said worked panel P' comprising said plurality of portions or parts or cut panels P'1, P'$_2$, ..., P'$_n$, and possibly also waste portions S and reusable portions R.

By piece pattern is meant the pattern which is stored in said logic control unit U and which contains the plurality of portions or parts or panels P'1, P'$_2$, ..., P'$_k$,..., P'$_n$, in which the panel P to be worked has to be cut.

Said radius r is measured from the center of the blade 11 up to the protrusion of the teeth.

Figure 2a also shows the cutting excess E in an amount equal to the radius r of the circular blade 11 and the calculated cutting excess E$_c$, which is instead calculated by the logic control unit U as a function of the radius r of the circular blade and the thickness of the panel P, as will be described in detail below.

Said blade 11 carries out the operations on said panel P advancing according to said first direction X or to said second direction Y, sliding along one direction and / or along the opposite direction.

Said worked panel P', in addition to said plurality of portions or cut parts or panels P'$_1$, P'$_2$, ..., P'$_n$ comprises at least one waste portion S and, possibly, at least one reusable portion R.

Referring to figure 2b, said nesting working unit 1 can also comprise a second tool 11', which makes a cut on said panel P, sliding along the direction X, but along the opposite way with respect to the sliding way of said first blade 11.

In particular, when said nesting working unit 1 translates along the X axis according to the direction of the arrow shown in figure 2a, said first blade 11 only makes an incision on said panel P, subsequently when said nesting working unit 1 translates along the X axis according to the direction opposite to the previous translation direction, said second tool, such as for example a second blade 11', effectively cuts the panel P along the incision groove traced by the first blade 11.

In a further embodiment, not shown in the figure, said nesting working unit 1 can also comprise said first blade 11 for making cuts according to the X direction and said second tool 11', such as a blade, also having a radius or a different thickness than that of said first blade 11, to make the cuts according to the Y direction.

Finally, said machine M can also comprise an end mill tool, which is installed in said nesting working unit 1 to replace said first blade 11.

Said cut panels P'$_1$, P'$_2$, ..., P'$_k$,..., P'$_n$ have different sizes and smaller sizes than said single panel P on the entry.

Said panels P'$_1$, P'$_2$, ..., P'$_k$,..., P'$_n$ can be labeled, each with its own identifying element, before working or after working said panel P.

In said logic control unit U predefined piece patterns are stored to obtain a plurality of cut panels P'$_1$, P'$_2$, ..., P'$_k$,..., P'$_n$ having predetermined sizes.

Referring to figure 3, starting from a panel P on the entry of said working unit 1, comprising a first edge

P$_a$, a second edge P$_b$, a third edge P$_c$ and a fourth edge P$_d$, a pieces patten, which allows obtaining a first panel P'$_1$ and a second panel P'$_2$, having a rectangular shape with at least one side of the same size, provides for the execution of a first linear passing cut ti from said first edge P$_a$ to said second edge P$_b$, according to the X axis, and a second linear passing cut t$_2$ from said third edge P$_c$ to said fourth edge P$_d$, according to the Y axis.

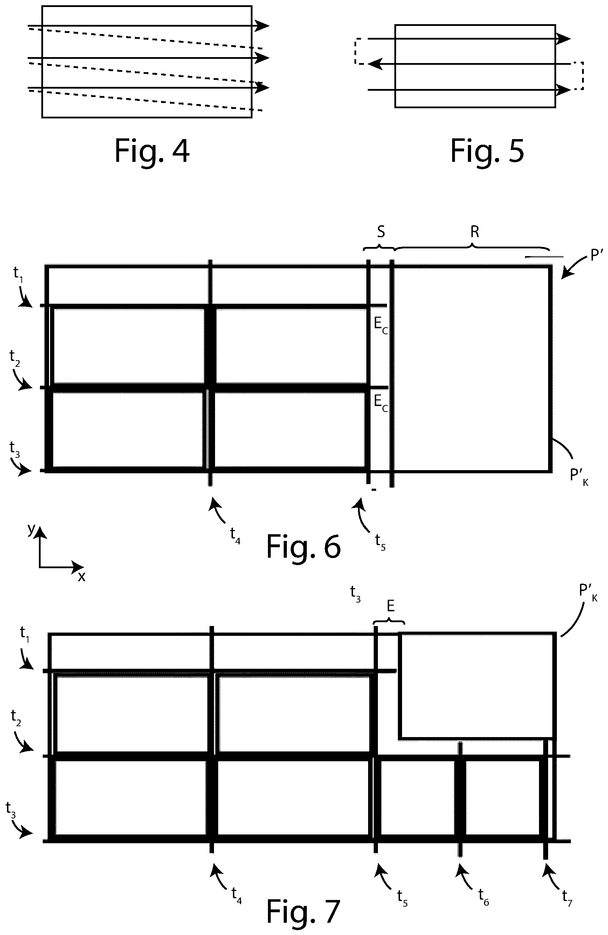

Referring to figures 4 and 5, it is possible to provide linear cuts as shown in figure 4, and zigzag, as shown in figure 5.

Referring to figures 6 and 7, said machine M allows to obtain, at the end of the working of the panel P, also a rectangular panel or rest R, which can be used for subsequent working.

For this type of processing, the cuts $t_1$, $t_2$, ..., $t_n$ do not pass from edge to edge of the panel P but are stopped at predetermined points of the panel, so as to obtain a reusable rest panel R.

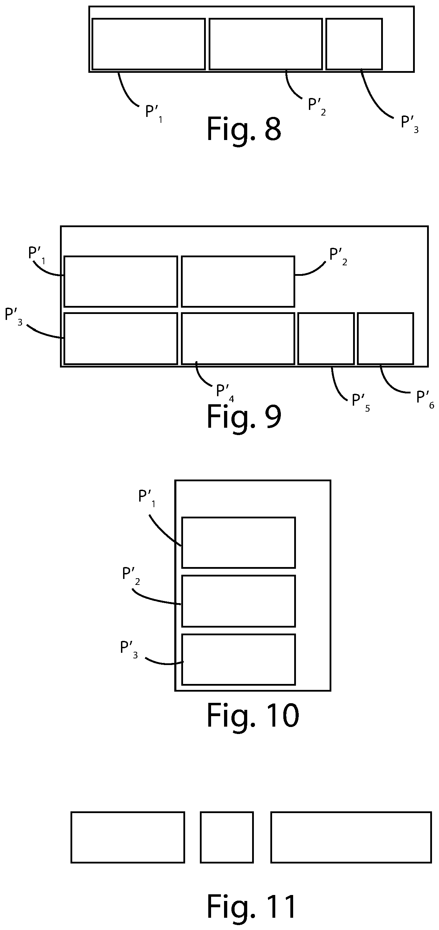

Referring to figures 8-11, it is also possible to set piece patterns by calculating a number of lines, from which obtaining the largest possible number of cut panels P'$_1$, P'$_2$, ..., P'$_k$,..., P'$_n$ having one side of the same size.

To obtain a panel P'$_k$ or a reusable panel R, said logic control unit U calculates exactly the actual calculated cutting excess E$_c$ taking into account the predetermined pieces pattern, the radius r of the circular blade 11 and the thickness d of the panel P to be cut.

The calculation of said cut exceed E$_c$, therefore allows to calculate a cutting pattern to obtain predetermined waste S and reusable R portions.

Said cutting pattern therefore makes it possible to optimize, i.e. minimizing the wasted portions S and instead maximize the rests R still usable for subsequent working.

Said logic control unit U performs the calculation of said calculated cutting exceed E$_c$ according to the following formula:

$$E_c = \sqrt{2 \cdot r \cdot d - d^2}$$

where r is the radius of said first circular blade 11 and d is the thickness of said panel P.

The calculation of said cuttings pattern is iterative and can be applied for each portion of rest R obtained by working.

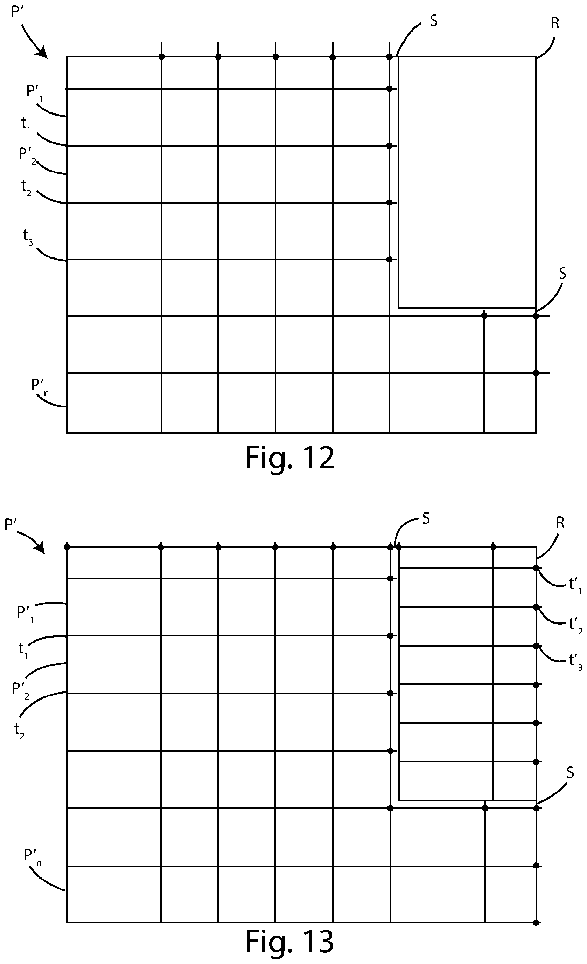

As shown in figures 12 and 13, the reusable portion R can still be divided into further pluralities of panels according to a further cuttings pattern t'$_1$, t'$_2$, ..., t'n.

The operation of the machine M described above is as follows.

Said nesting working unit 1 receives as input a single panel P, arranged on said work surface 2, in particular on said input portion 21.

Said at least one first blade 11 cuts said single panel P according to a predetermined pieces pattern, to obtain, as previously described, a worked panel P' comprising a plurality of portions, parts or cut panels P'$_1$, P'$_2$,...,P'$_n$ having dimensions smaller than said single panel P and dimensions different from each other, and also optionally said waste S and reusable R portions.

Said logic control unit U, on the basis of said values of thickness d of the panel P, radius r of the circular blade 11 and predetermined pieces pattern, calculates the calculated cutting excess E$_c$ and therefore a cuttings pattern t$_1$, t$_2$, ..., tn.

By cutting pattern it is meant a set of cuts that said logic control unit U calculates to obtain said plurality of cut parts or panels P'$_1$, P'$_2$,..., P'$_n$, rests R and optimized waste S.

Furthermore, for said rests R, said logic control unit U calculates a further cuttings pattern, to obtain a further plurality of cut panels starting from a reusable panel R.

Then the calculation of the cutting pattern is iterative and takes place until further reusable panels R are obtained.

Therefore, said logic control unit U controls the movement of said blade 11 or also of said further cutting tool 11', according to said cutting pattern in order to obtain a reusable rest panel R, preferably rectangularly-shaped.

All the panels, cut starting from a single panel P, come out of the machine M at the same time.

As is evident from the above description, the machine M object of the present invention allows to perform an optimized cutting process of a panel P, so as to obtain a reusable rest portion.

The present invention has been described for illustrative but not limitative purposes, according to its preferred embodiments, but it is to be understood that modifications and/or changes can be introduced by those skilled in the art without departing from the scope of the invention as defined in the enclosed claims.

**Claims**

1. Machine (M) for working at least one panel (P), in wood, plastic, metal, fiberglass, glass and the like, comprising

   a working unit (1) of said at least one panel (P), having a thickness (d), receiving on entry said at least one panel (P), and providing on exit a panel (P') comprising a plurality of portions (P'$_1$, P'$_2$, ..., P'$_n$), wherein said panel (P) has been divided according to a predetermined pieces pattern;
   a logic control unit (U), operationally connected with said working unit (1) and provided with a program for controlling said working unit (1), wherein said working unit (1) comprises at least one first saw (11) having a radius (r), **characterized in that** said logic control unit (U) is configured for receiving the following input parameters:

   said predetermined pieces pattern,
   said thickness (d) of said panel (P),
   said radius (r) of said first saw (11); and
   calculating a cuttings pattern in order to obtain waste portions (S) and reusable portions (R) in function of said input parameters.

2. Machine (M) according to the preceding claim, **characterized in that** said logic control unit (U) is configured for controlling the movement of said first saw (11) on said panel (P) for carrying out said cutting pattern.

3. Machine (M) according to any one of the preceding claims, **characterized**

   **in that** said cuttings pattern is associated with a cutting excess E$_C$, and
   **in that** said cutting excess E$_C$ is calculated according to the following formula:

   $$E_c = \sqrt{2 \cdot r \cdot d - d^2}$$

   where d is the thickness of said panel (P) and r is the radius of said first saw (11).

4. Machine (M) according to any one of the preceding claims, **characterized in that** said working unit (1) comprises a second tool (11').

5. Machine (M) according to the preceding claim, **characterized**

   **in that** said first saw (11) carries out an incision on said panel (P) sliding along a forward direction (X) and\or (Y) according to a first predetermined direction;
   **in that** said second tool (11') carries out a breaking cut of said incision sliding in a second direction opposite to said first direction.

6. Machine (M) according to claim 4, **characterized**

   **in that** said first saw (11) carries out a working on said panel (P) sliding along a first forward direction (X); and
   **in that** said second tool (11') carries out a working sliding according to a second forward direction (Y) perpendicular with respect to said first forward direction (X).

7. Machine (M) according to any one of the preceding claims, **characterized in that** said first tool (11) is a

**8.** Machine (M) according to any one of the preceding claims, **characterized in that** said logic control unit (U) is configured for iteratively calculating a cuttings pattern on said reusable portions (R).

**9.** Operation method of a machine (M) for working at least one panel (P), having a thickness (d), in wood, plastic, metal, fiberglass, glass and the like, of the type comprising a first saw (11) having a radius (r) comprising the following steps:

a. acquiring a predetermined pieces pattern of said panel (P);
b. acquiring said thickness (d) of said panel (P);
c. acquiring said radius (r) of said first saw (11);
d. calculating a cuttings pattern associated with a cutting excess $E_c$ in function of the acquired parameters in said points a., b., and c. according to the following formula

$$E_c = \sqrt{2 \cdot r \cdot d - d^2}$$

e. cutting said at least one panel (P) in a plurality of portions ($P'_1$, $P'_2$, ..., $P'_n$), waste portions (S) and reusable portions (R) according to said cuttings pattern calculated in said step d.

**10.** Method according to the preceding claim, **characterized in that** it comprises a labelling step of said plurality of portions ($P'_1$, $P'_2$, ..., $P'_n$), before or after said step e.

**11.** Method according to any one of claims 9 or 10, **characterized in that** it comprises a changing tool step for replacing said first saw (11) with a ball end mill.

**12.** Method according to any one of claims 9-11, **characterized in that** it comprises a further step d'. for calculating a further cuttings pattern on said one or more reusable portions (R), to be carried out at the same time or after said step d.

**Patentansprüche**

**1.** Maschine (M) zur Bearbeitung wenigstens einer Platte (P) aus Holz, Metall, Fiberglas, Glas usw. umfassend

eine Arbeitseinheit (1) von besagter mindestens einer Platte (P) mit einer Dicke (d), die am Eingang die besagte mindestens eine Platte (P) aufnimmt und am Ausgang eine Platte (P') bereitstellt, die eine Vielzahl von Abschnitten umfasst (P'_1, P'_2, ..., P'_n), wobei die besagte Platte (P) gemäß einem vorbestimmten Stückmuster geteilt wurde;
eine logische Steuereinheit (U), funktionell mit besagter Arbeitseinheit (1) verbunden und mit einem Programm zur Steuerung von besagter Arbeitseinheit (1) versehen,
wobei die besagte Arbeitseinheit (1) zumindest eine erste Säge (11) mit einem Radius (r) umfasst,
**dadurch gekennzeichnet,**
**dass** die besagte logische Steuereinheit (U) konfiguriert ist, die folgenden Eingabe-Parameter zu empfangen:

das besagte, vorbestimmte Stückmuster, besagte Dicke (d) der besagten Platte (P), besagten Radius (r) der besagten ersten Säge (11); und
Berechnung eines Schnittmusters, um dadurch Abfallabschnitte (S) und wiederverwendbare Abschnitte (R) je nach den besagten Eingabe-Parametern zu erhalten.

**2.** Maschine (M) nach dem vorhergehenden Anspruch, **dadurch gekennzeichnet, dass** die logische Steuereinheit (U) zum Steuern der Bewegung der ersten Säge (11) auf der Platte (P) zum Ausführen des Schnittmusters konfiguriert ist.

**3.** Maschine (M) von einem der vorangegangenen Ansprüche, **dadurch gekennzeichnet,**

**dass** das besagte Schnittmuster einem Verschnitt $E_C$ zugeordnet ist, und
**dass** der besagte Verschnitt $E_C$ nach der folgenden Formel berechnet wird:

$$E_c = \sqrt{2 \cdot r \cdot d - d^2}$$

wobei d die Dicke der besagten Platte (P) ist und r der Radius der besagten ersten Säge (11).

**4.** Maschine (M) von einem der vorangegangenen Ansprüche, **dadurch gekennzeichnet, dass** die besagte Arbeitseinheit (1) ein zweites Werkzeug (11') umfasst.

**5.** Maschine (M) gemäß dem vorangegangenen Anspruch, **dadurch gekennzeichnet, dass** die besagte erste Säge (11) einen Einschnitt in der besagten Platte (P) ausführt, entlang einer Vorwärtsrichtung (X) und/oder (Y) gleitend, entsprechend einer ersten vorbestimmten Richtung;
und dass das besagte zweite Werkzeug (11') einen Bruchschnitt des besagten Einschnitts in einer Richtung entgegen der besagten ersten Richtung ausführt.

**6.** Maschine (M) gemäß Anspruch 4, **dadurch gekennzeichnet,**

> **dass** die besagte erste Säge (11) einen Arbeitsvorgang an der besagten Platte (P) ausführt, entlang einer ersten Vorwärtsrichtung (X); und **dass** das besagte zweite Werkzeug (11') einen gleitenden Arbeitsvorgang gemäß einer zweiten Vorwärtsrichtung (Y) senkrecht zu der besagten ersten Vorwärtsrichtung (X) ausführt.

**7.** Maschine (M) nach einem der vorhergehenden Ansprüche, **dadurch gekennzeichnet, dass** das erste Werkzeug (11) ein Kugelstirnfräser ist.

**8.** Maschine (M) nach einem der vorhergehenden Ansprüche, **dadurch gekennzeichnet, dass** die besagte logische Steuereinheit (U) zum iterativen Berechnen eines Schnittmusters auf den wiederverwendbaren Abschnitten (R) konfiguriert ist.

**9.** Betriebsverfahren einer Maschine (M) zum Bearbeiten mindestens einer Platte (P) mit einer Dicke (d) aus Holz, Kunststoff, Metall, Glasfaser, Glas und dergleichen, von der Art, die eine erste Säge (11) aufweist mit einem Radius (r), und welche die folgenden Schritte umfasst:

> a. Erfassen eines vorbestimmten Stückmusters der besagten Platte (P);
> b. Erfassen der besagten Dicke (d) der besagten Platte (P);
> c. Erfassen des besagten Radius (r) der besagten ersten Säge (11);
> d. Berechnen eines Schnittmusters, das einem Verschnitt $E_c$ zugeordnet ist, in Abhängigkeit von den erfassten Parametern in den Punkten a., b., und c. nach folgender Formel

$$E_c = \sqrt{2 \cdot r \cdot d - d^2}$$

> e. Schneiden der mindestens einen Platte (P) in eine Vielzahl von Abschnitten (P'$_1$, P'$_2$, ..., P'$_n$), Abfallabschnitten (S) und wiederverwendbaren Abschnitten (R) gemäß dem in besagtem Schritt d berechneten Schnittmuster.

**10.** Verfahren gemäß dem vorherigen Anspruch, **dadurch gekennzeichnet, dass** es einen Schritt zur Etikettierung der besagten Vielzahl von Abschnitten (P'$_1$, P'$_2$,...., P'$_n$) umfasst, vor oder nach besagtem Schritt e.

**11.** Verfahren nach einem der Ansprüche 9 oder 10, **dadurch gekennzeichnet, dass** es einen Werkzeugwechselschritt zum Ersetzen der besagten ersten Säge (11) durch einen 5-Kugel-Schaftfräser umfasst.

**12.** Verfahren nach einem der Ansprüche 9-11, **dadurch gekennzeichnet, dass** es einen weiteren Schritt d'. umfasst zum Berechnen eines weiteren Schnittmusters auf dem einen oder den mehreren wiederverwendbaren Abschnitten (R), das gleichzeitig oder nach dem besagten Schritt d ausgeführt wird.

**Revendications**

**1.** Machine (M) pour travailler au moins un panneau (P), en bois, plastique, métal, fibre de verre, verre et similaires, comprenant une unité de travail (1) dudit au moins un panneau (P), ayant une épaisseur (d), recevant à l'entrée ledit au moins un panneau (P), et fournissant à la sortie un panneau (P') comprenant une pluralité de parties (P'$_1$, P'$_2$, ..., P'$_n$), dans lequel ledit panneau (P) a été divisé selon un modèle de pièces prédéterminé;

> une unité de commande logique (U), connectée de manière opérationnelle à ladite unité de travail (1) et dotée d'un programme pour commander ladite unité de travail (1),
> dans lequel
> ladite unité de travail (1) comprend au moins une première scie (11) ayant un rayon (r),
> **caractérisé en ce que** ladite unité de commande logique (U) est configurée pour recevoir les paramètres d'entrée suivants:

> > ledit modèle de pièces prédéterminé,
> > ladite épaisseur (d) dudit panneau (P),
> > ledit rayon (r) de ladite première scie (11); et calculer un modèle de coupes afin d'obtenir des parties de déchets (S) et des parties réutilisables (R) en fonction desdits paramètres d'entrée.

**2.** Machine (M) selon la revendication précédente, **caractérisée en ce que** ladite unité de commande logique (U) est configurée pour commander le mouvement de ladite première scie (11) sur ledit panneau (P) pour réaliser ledit modèle de coupe.

**3.** Machine (M) selon l'une quelconque des revendications précédentes, **caractérisée**

> **en ce que** ledit modèle de coupe est associé à un excédent de coupe $E_C$, et
> **en ce que** ledit excédent de coupe $E_C$ est calculé selon la formule suivante:

$$E_c = \sqrt{2 \cdot r \cdot d - d^2}$$

où d est l'épaisseur dudit panneau (P) et r est le rayon de ladite première scie (11).

4. Machine (M) selon l'une quelconque des revendications précédentes, **caractérisée en ce que** ladite unité de travail (1) comprend un deuxième outil (11').

5. Machine (M) selon la revendication précédente, **caractérisée en ce que** ladite première scie (11) effectue une incision sur ledit panneau (P) en glissant le long d'une direction avant (X) et arrière (Y) selon une première direction prédéterminée; **en ce que** ledit deuxième outil (11') réalise une coupe de rupture de ladite incision en coulissant selon une deuxième direction opposée à ladite première direction.

6. Machine (M) selon la revendication 4, **caractérisée**

   **en ce que** ladite première scie (11) effectue un travail sur ledit panneau (P) en glissant le long d'une première direction avant (X); et **en ce que** ledit deuxième outil (11') effectue un travail coulissant selon une deuxième direction d'avance (Y) perpendiculaire à ladite première direction d'avance (X).

7. Machine (M) selon l'une quelconque des revendications précédentes, **caractérisée en ce que** ledit premier outil (11) est une fraise boule.

8. Machine (M) selon l'une quelconque des revendications précédentes, **caractérisée en ce que** ladite unité de commande logique (U) est configurée pour calculer de manière itérative un modèle de coupe sur lesdites parties réutilisables (R).

9. Procédé d'utilisation d'une machine (M) pour travailler au moins un panneau (P), ayant une épaisseur (d), en bois, plastique, métal, fibre de verre, verre et similaires, du type comprenant une première scie (11) ayant un rayon (r) comprenant les étapes suivantes:

   a. l'acquisition d'un modèle de pièces prédéterminé dudit panneau (P);
   b. acquérir ladite épaisseur (d) dudit panneau (P);
   c. acquérir ledit rayon (r) de ladite première scie (11);
   d. calcul d'un modèle de pièces associé à un excédent de coupe $E_c$ en fonction des paramètres acquis dans lesdits points a., b., et c. selon la formule suivante:

$$E_c = \sqrt{2 \cdot r \cdot d - d^2}$$

   e. découper ledit au moins un panneau (P) en une pluralité de portions (P'$_1$, P'$_2$, ..., P'$_n$), de portions de déchets (S) et de portions réutilisables (R) selon ledit modèle de coupe calculé dans ladite étape d.

10. Procédé selon la revendication précédente, **caractérisé en ce qu'**il comprend une étape d'étiquetage de ladite pluralité de portions (P'$_1$, P'$_2$, P'$_n$), avant ou après ladite étape e.

11. Procédé selon l'une quelconque des revendications 9 ou 10, **caractérisé en ce qu'**il comprend une étape de changement d'outil pour remplacer ladite première scie (11) par une fraise à billes.

12. Procédé selon l'une quelconque des revendications 9 à 11, **caractérisé en ce qu'**il comprend une étape supplémentaire d'. pour calculer un modèle de coupe supplémentaire sur lesdites une ou plusieurs parties réutilisables (R), à réaliser en même temps ou après ladite étape d.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018153937 A1
- EP 2377652 A1
- US 4181054 A